# EUROPEAN PATENT APPLICATION

(11) **EP 4 843 686 A1**
(43) Date of publication of application: **25.11.2026**
(21) Application number: 26152378.1
(22) Date of filing: 16.01.2026
(51) Int. Cl.: B22F 1/054, B01J 23/42, B22F 1/145, B22F 1/17, B22F 9/24

(54) **HIGH-DISPERSION SYNTHESIS OF ATOMIC-SCALE PLATINUM PARTICLES IN HETEROGENEOUS SYSTEM**

(30) Priority: 22.05.2025 KR 20250066497; 10.11.2025 KR 20250168720
(71) Applicant: Ajou University Industry-Academic Cooperation Foundation, Suwon-si, Gyeonggi-do 16499 (KR)
(72) Inventor: Yu, Sungju, 18482 Hwaseong-si, Gyeonggi-do (KR); Park, Juneseo, 16593 Suwon-si, Gyeonggi-do (KR)
(74) Representative: Fink Numrich Patentanwälte PartmbB

(57) **Abstract**

A method for high-dispersion synthesis of atomic-scale platinum particles in a heterogeneous system is disclosed. The synthesis method may include a first step of mixing and dispersing a support and a platinum precursor with each other in an reaction solution; and a second step of separating, drying, and heat-treating solids from the reaction solution.

## Description

### BACKGROUND

### Field

The present disclosure relates to a method for the high-dispersion synthesis of atomic-scale platinum particles in a heterogeneous system. As used herein, the term 'atomic-scale platinum particles' may refer to, and may be used interchangeably with, 'atomically dispersed platinum,' 'single-atom platinum species,' or 'Pt single atoms,' unless the context clearly indicates otherwise.

### Description of Related Art

Platinum catalysts play a key role in various chemical reactions such as hydrogen production, fuel cells, and oxygen reduction reactions due to their excellent catalytic activity. In particular, their high electron transfer capability and stable surface reaction characteristics are competitive compared to other catalyst materials. These characteristics may enable the development of high-efficiency energy conversion devices and contribute to accelerating the commercialization of next-generation clean energy technologies. As the catalytic potential of platinum is very high, technologies to utilize the same as efficiently as possible are continuously required.

Nevertheless, the platinum catalysts have fundamental constraints of scarcity and high price, which may be a burden for practical industrial application. In particular, when expensive precious metals are used in large quantities, the manufacturing cost of the entire system may increase significantly, acting as a barrier to commercialization. Therefore, technical efforts to reduce the amount of platinum used while maintaining the same catalytic performance need to be paralleled. As a result of one of these technical efforts, interest in dispersion technology that disperses the platinum particles more efficiently is increasing.

As a method to evenly disperse the platinum particles is being researched, and in particular, a method of fixing the platinum particle at the atomic scale on the surface of a support is emerging as a promising alternative. Since this technology may provide more reaction sites with the same amount of platinum, it may contribute to maximizing catalytic activity efficiency. At the same time, interaction between the support and the platinum may suppress the migration or aggregation of catalyst particles, which may help improve long-term stability and reaction selectivity.

However, the process of dispersing the platinum particles may have limitations such as complex processes or uneven dispersion at the atomic scale thereof. For example, when a special process such as high-temperature heat treatment or vacuum equipment is required, a manufacturing cost increases, and there may be difficulties in securing reproducibility. Additionally, some technologies may result in the platinum particles being fixed only locally on the support, leading to a decrease in a global dispersibility. In this regard, a new approach that is simpler yet capable of achieving the high dispersion effect is still required.

Meanwhile, the platinum is a material that may play an important role not only as a catalyst but also in various application fields such as electrochemical interface formation, sensor materials, hydrogen storage, nano-electronic devices, medical diagnosis, and drug delivery. Therefore, technology to evenly disperse the platinum particles at the nano-scale or atomic-scale is a fundamental synthesis technology applicable to a wide range of fields beyond catalysis.

### SUMMARY

A technical purpose of the present disclosure is to provide the synthesis of highly-dispersed platinum particles in which the platinum particles at the atomic scale are evenly dispersed on the surface of each of various supports.

In particular, a technical purpose of the present disclosure is to provide the high-dispersion synthesis of atomic-scale platinum particles in a heterogeneous system that has a simpler process compared to conventional synthesis methods, is economical, and has high reproducibility under various conditions.

The purposes of the present disclosure are not limited to the above-mentioned purposes, and other purposes and advantages of the present disclosure that are not mentioned may be understood based on the following descriptions, and will be more clearly understood based on the embodiment of the present disclosure. In addition, it will be readily appreciated that the purposes and advantages of the present disclosure may be realized by means recited in the claims and combinations thereof.

The present disclosure relates to a new synthesis method for evenly dispersing and fixing the platinum (Pt) precursor at an atomic scale on ad to the surface of a specific support using a wet chemical method. Specifically, the process proposed by the present inventor may include following steps. First, the support (e.g., a support made of a metal oxide such as TiO₂ or a carbon-based support, etc.) and the platinum precursor (a salt containing Pt or H₂PtCl₆) may be mixed with each other and then uniformly dispersed through ultrasonic treatment or the like. Subsequently, the pH of the dispersion solution may be controlled to be an acidic condition, and then, the solid and liquid of the solution may be separated from each other through a filtration or centrifugation process, and the separated solid may be dried in an oven. Finally, the dried solid may be heat-treated to activate the platinum single atoms so that the atoms may be strongly bonded to the support surface.

In one aspect, the present disclosure provides a method for high-dispersion synthesis of atomic-scale platinum particles, the method comprising: a first step of mixing and dispersing a support and a platinum precursor with each other in an reaction solution; and a second step of separating, drying, and heat-treating solid from the reaction solution.

In some embodiments of the method for high-dispersion synthesis of atomic-scale platinum particles, the reaction solution is an acidic reaction solution.

In some embodiments of the method for high-dispersion synthesis of atomic-scale platinum particles, the support includes at least one of a metal oxide support or a carbon-based support.

In some embodiments of the method for high-dispersion synthesis of atomic-scale platinum particles, the support is a nanoparticle.

In some embodiments of the method for high-dispersion synthesis of atomic-scale platinum particles, the platinum precursor includes at least one of a salt containing Pt or H₂PtCl₆.

In some embodiments of the method for high-dispersion synthesis of atomic-scale platinum particles, in the first step, a mixture of the support and the platinum precursor is subjected to dispersion in the reaction solution using ultrasonic treatment.

In some embodiments of the method for high-dispersion synthesis of atomic-scale platinum particles, the platinum precursor is added into the reaction solution at a content smaller than 0.211 wt% based on platinum element.

In some embodiments of the method for high-dispersion synthesis of atomic-scale platinum particles, the pH of the acidic reaction solution may be in a range of about 1 to 3.

In some embodiments of the method for high-dispersion synthesis of atomic-scale platinum particles, the metal oxide may include TiO₂.

In some embodiments of the method for high-dispersion synthesis of atomic-scale platinum particles, the heat treatment may be performed at a temperature lower than about 900 °C.

In another aspect, the present disclosure provides an atomic-scale platinum structure prepared through the method for high-dispersion synthesis of atomic-scale platinum particles as described above.

In some embodiments of the atomic-scale platinum structure, in the atomic-scale platinum structure, the atomic-scale platinum particles are dispersed on a surface of the support.

The effect of the present disclosure lies in that it may alleviate industrial constraints caused by the high price and scarcity of platinum. In particular, even when using the same amount of platinum, a wider surface dispersion may be secured, so that there is a possibility of utilizing the present disclosure in order to increases efficiency relative to the amount of platinum used.

In addition to the above-described effects, the specific effects of the present disclosure will be described together while describing specific matters for implementing the embodiments of the present disclosure below.

### BRIEF DESCRIPTION OF DRAWINGS

FIG. 1A is a high-resolution HAADF-STEM image showing atomic-scale platinum particles dispersed on the surface of titanium dioxide nanoparticles.
FIG. 1B is a high-resolution HAADF-STEM image showing 0.088 wt% platinum particles dispersed on the surface of titanium dioxide nanoparticles.
FIG. 1C is a high-resolution HAADF-STEM image showing 0.130 wt% platinum particles dispersed on the surface of titanium dioxide nanoparticles.
FIG. 1D is a high-resolution HAADF-STEM image showing 0.183 wt% platinum particles dispersed on the surface of titanium dioxide nanoparticles.
FIG. 1E is a high-resolution HAADF-STEM image showing 0.211 wt% platinum particles dispersed on the surface of titanium dioxide nanoparticles.
FIG. 2A is a diagram showing the size distribution of atomic-scale platinum particles dispersed on the surface of titanium dioxide nanoparticles when 0.088 wt% of platinum is used.
FIG. 2B is a diagram showing the size distribution of atomic-scale platinum particles dispersed on the surface of titanium dioxide nanoparticles when 0.130 wt% of platinum is used.
FIG. 2C is a diagram showing the size distribution of atomic-scale platinum particles dispersed on the surface of titanium dioxide nanoparticles when 0.183 wt% of platinum is used.
FIG. 2D is a diagram showing the size distribution of atomic-scale platinum particles dispersed on the surface of titanium dioxide nanoparticles when 0.211 wt% of platinum is used.
FIG. 3A is a high-resolution HAADF-STEM high-magnification image showing 0.054 wt% platinum particles dispersed on the surface of titanium dioxide nanoparticles.
FIG. 3B includes high-resolution HAADF-STEM high-magnification and low-magnification images showing 0.025 wt% platinum particles dispersed on the surface of titanium dioxide nanoparticles.
FIG. 4A is a HAADF-STEM image showing atomic-scale platinum particles dispersed on the surface of titanium dioxide nanoparticles when 0.025 wt% of platinum is used.
FIG. 4B is a Ti element mapping image of the same area as that in FIG. 4A.
FIG. 4C is an O element mapping image of the same area as that in FIG. 4A.
FIG. 4D is a Pt element mapping image of the same area as that in FIG. 4A.
FIG. 5A is a diagram showing the high-resolution Pt 4f XPS spectrum of atomic-scale platinum particles dispersed on the surface of titanium dioxide nanoparticles when 0.088 wt% of platinum is used.
FIG. 5B is a diagram showing the high-resolution Pt 4f XPS spectrum of atomic-scale platinum particles dispersed on the surface of titanium dioxide nanoparticles when 0.130 wt% of platinum is used.
FIG. 5C is a diagram showing the high-resolution Pt 4f XPS spectrum of atomic-scale platinum particles dispersed on the surface of titanium dioxide nanoparticles when 0.183 wt% of platinum is used.
FIG. 5D is a diagram showing the high-resolution Pt 4f XPS spectrum of atomic-scale platinum particles dispersed on the surface of titanium dioxide nanoparticles when 0.211 wt% of platinum is used.
FIG. 6 is a diagram quantitatively comparing the surface chemical state of platinum based on the platinum loading amount or content to compare the ratio of the metallic state and the oxidation state of platinum.
FIG. 7A is a diagram showing reference spectra of a metal platinum foil and platinum oxide (PtO₂) to identify the XANES (X-ray Absorption Near Edge Structure) spectra of platinum in the metallic state and the oxidation state.
FIG. 7B is a diagram showing the Pt L₃-edge XANES spectrum of the platinum particles of the present disclosure together with the XANES baseline identified in FIG. 7A when 0.088 wt% of platinum is used.
FIG. 7C is a diagram showing the Pt L₃-edge XANES spectrum of the platinum particles of the present disclosure together with the XANES baseline identified in FIG. 7A when 0.130 wt% of platinum is used.
FIG. 7D is a diagram showing the Pt L₃-edge XANES spectrum of the platinum particles of the present disclosure together with the XANES baseline identified in FIG. 7A when 0.183 wt% of platinum is used.
FIG. 7E is a diagram showing the Pt L₃-edge XANES spectrum of the platinum particles of the present disclosure together with the XANES baseline identified in FIG. 7A when 0.211 wt% of platinum is used.
FIG. 8 shows the results of CO-DRIFTS (CO-probed Diffuse Reflectance Infrared Fourier Transform Spectroscopy) analysis of the platinum particles of the present disclosure.
FIG. 9 is a diagram comparing the UV-Vis absorption spectra of a Pt/TiO₂ structure heat-treated under optimized conditions and a Pt/TiO₂ structure heat-treated under non-optimized conditions with each other.

### DETAILED DESCRIPTIONS

Advantages and features of the present disclosure, and a method of achieving the advantages and features will become apparent with reference to embodiments described later in detail together with the accompanying drawings. However, the present disclosure is not limited to the embodiments as disclosed under, but may be implemented in various different forms. Thus, these embodiments are set forth only to make the present disclosure complete, and to completely inform the scope of the present disclosure to those of ordinary skill in the technical field to which the present disclosure belongs, and the present disclosure is only defined by the scope of the claims.

Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

A shape, a size, a ratio, an angle, a number, etc. disclosed in the drawings for illustrating embodiments of the present disclosure are illustrative, and the present disclosure is not limited thereto.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in the present disclosure, specify the presence of the stated features, integers, operations, elements, and/or components, but do not preclude the presence or addition of one or more other features, integers, operations, elements, components, and/or portions thereof.

In addition, it will also be understood that when a first element or layer is referred to as being present "on" a second element or layer, the first element may be disposed directly on the second element or may be disposed indirectly on the second element with a third element or layer being disposed between the first and second elements or layers. It will be understood that when an element or layer is referred to as being "connected to", or "coupled to" another element or layer, it may be directly connected to, or coupled to the other element or layer, or one or more intervening elements or layers may be present therebetween. In addition, it will also be understood that when an element or layer is referred to as being "between" two elements or layers, it may be the only element or layer between the two elements or layers, or one or more intervening elements or layers may also be present.

When a certain embodiment may be implemented differently, a function or an operation specified in a specific block may occur in a different order from an order specified in a flowchart. For example, two blocks in succession may be actually performed substantially concurrently, or the two blocks may be performed in a reverse order depending on a function or operation involved.

When an embodiment may be implemented differently, functions or operations specified within a specific block may be performed in a different order from an order specified in a flowchart. For example, two consecutive blocks may actually be performed substantially simultaneously, or the blocks may be performed in a reverse order depending on related functions or operations.

The features of the various embodiments of the present disclosure may be partially or entirely combined with each other, and may be technically associated with each other or operate with each other. The embodiments may be implemented independently of each other and may be implemented together in an association relationship.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "embodiments," "examples," "aspects, and the like should not be construed such that any aspect or design as described is superior to or advantageous over other aspects or designs.

In interpreting a numerical value, the value is interpreted as including an error range unless there is no separate explicit description thereof. In the context of the present disclosure, terms such as "about" may mean about ± 1%, about ± 2%, about ± 3%, about ± 4%, about ± 5%, about ± 6%, about ± 7%, about ± 8%, about ± 9%, or about ± 10% of the numerical value described in the present disclosure.

Further, the term 'or' means 'inclusive or' rather than 'exclusive or'. That is, unless otherwise stated or clear from the context, the expression that 'x uses a or b' means any one of natural inclusive permutations.

Further, in a specific case, a term may be arbitrarily selected by the applicant, and in this case, the detailed meaning thereof will be described in a corresponding description period. Therefore, the terms used in the description below should be understood based on not simply the name of the terms, but the meaning of the terms and the contents throughout the Detailed Descriptions.

The method for high-dispersion synthesis of atomic-scale platinum particles according to an embodiment of the present disclosure may include a first step of mixing and dispersing a support and a platinum precursor with each other in an reaction solution; and a second step of separating, drying, and heat-treating solid from the reaction solution. In some embodiments of the method for high-dispersion synthesis of atomic-scale platinum particles, the reaction solution is an acidic reaction solution.

In the present disclosure, the term "support" refers to a physical base or surface onto which the platinum precursor can be fixed or on which the platinum precursor can be present in a dispersed manner, and serves to suppress aggregation of platinum particles during the reaction and help platinum atoms to be fixed thereto during the subsequent heat treatment process.

The role of the first step is to create conditions so that the support and the platinum precursor are uniformly mixed with each other in the reaction solution and the platinum precursor may effectively contact the support surface. In particular, the acidic condition of the reaction solution may provide an environment to secure dispersion uniformity.

In one embodiment, the pH of the acidic reaction solution may be in a range of about 1 to 3. If the pH is excessively low, there is a possibility that the platinum precursor is excessively stabilized and remains in the solution without being adsorbed on the support surface. If the pH is excessively high, the platinum precursor may rapidly precipitate in the form of a hydroxide and may not be uniformly adsorbed on the support surface.

In one embodiment, the support may include one or more of a metal oxide support or a carbon-based support. In an example, the metal oxide may include TiO₂. The material of the support is not particularly limited as long as it provides a surface onto which the platinum precursor can be fixed or on which the platinum precursor can be present in the dispersed manner, and possesses physical and chemical properties capable of maintaining structural stability even during the heat treatment process. In one embodiment, the support may be nanoparticles.

In one embodiment, the platinum precursor may include one or more of a salt containing Pt or H₂PtCl₆. The platinum precursor is not particularly limited as long as it exists stably in the reaction solution, may be adsorbed onto or be present on the support surface in a dispersed manner, and acts so that atomic-scale platinum particles may be fixed to the support through the heat treatment process.

In one embodiment, the platinum precursor may be mixed into the reaction solution at a content smaller than 0.211 wt% based on the platinum element. In one embodiment, the platinum precursor may be mixed into the reaction solution at a content greater than 0 wt% and smaller than 0.211 wt% based on the platinum element. In this regard, the content of the platinum precursor is calculated based on the mass of the platinum element. In this regard, a reference mass is set to the total mass of the final product including the support and the platinum. If the platinum content is excessively low, a sufficient amount of platinum atoms is not adsorbed on the support surface, which may lower the density of active sites. Thus, the number of platinum particles capable of participating in the reaction decreases, thereby reducing overall activity, and the electronic effect of platinum appears limitedly. If the platinum content is excessively high, the concentration of the platinum precursor in the solution becomes excessive, which may lead to aggregation between the platinum particles without being uniformly dispersed on the support surface. Such aggregation prevents the structure in which the atomic scale platinum particles are dispersed, and in some regions, platinum clusters and nanoparticles are formed, thereby increasing inactive regions.

In some further embodiments, the platinum precursor may be mixed into the reaction solution at a content greater than 0 wt% and smaller than 0.013 wt% based on the platinum element. In some further embodiments, the platinum precursor may be mixed into the reaction solution at a content greater than 0 wt% and smaller than 0.025 wt% based on the platinum element. In some further embodiments, the platinum precursor may be mixed into the reaction solution at a content greater than 0 wt% and smaller than 0.054 wt% based on the platinum element. In some further embodiments, the platinum precursor may be mixed into the reaction solution at a content greater than 0 wt% and smaller than 0.088 wt% based on the platinum element. In some further embodiments, the platinum precursor may be mixed into the reaction solution at a content greater than 0 wt% and smaller than 0.13 wt% based on the platinum element. In some further embodiments, the platinum precursor may be mixed into the reaction solution at a content greater than 0 wt% and smaller than 0.183 wt% based on the platinum element. In some further embodiments, the platinum precursor may be mixed into the reaction solution at a content greater than 0 wt% and smaller than 0.211 wt% based on the platinum element.

In some further embodiments, the platinum precursor may be mixed into the reaction solution at a content greater than 0.013 wt% and smaller than 0.025 wt% based on the platinum element. In some further embodiments, the platinum precursor may be mixed into the reaction solution at a content greater than 0.013 wt% and smaller than 0.054 wt% based on the platinum element. In some further embodiments, the platinum precursor may be mixed into the reaction solution at a content greater than 0.013 wt% and smaller than 0.088 wt% based on the platinum element. In some further embodiments, the platinum precursor may be mixed into the reaction solution at a content greater than 0.013 wt% and smaller than 0.13 wt% based on the platinum element. In some further embodiments, the platinum precursor may be mixed into the reaction solution at a content greater than 0.013 wt% and smaller than 0.183 wt% based on the platinum element. In some further embodiments, the platinum precursor may be mixed into the reaction solution at a content greater than 0.013 wt% and smaller than 0.211 wt% based on the platinum element.

In some further embodiments, the platinum precursor may be mixed into the reaction solution at a content greater than 0.025 wt% and smaller than 0.054 wt% based on the platinum element. In some further embodiments, the platinum precursor may be mixed into the reaction solution at a content greater than 0.025 wt% and smaller than 0.088 wt% based on the platinum element. In some further embodiments, the platinum precursor may be mixed into the reaction solution at a content greater than 0.025 wt% and smaller than 0.13 wt% based on the platinum element. In some further embodiments, the platinum precursor may be mixed into the reaction solution at a content greater than 0.025 wt% and smaller than 0.183 wt% based on the platinum element. In some further embodiments, the platinum precursor may be mixed into the reaction solution at a content greater than 0.025 wt% and smaller than 0.211 wt% based on the platinum element.

In some further embodiments, the platinum precursor may be mixed into the reaction solution at a content greater than 0.054 wt% and smaller than 0.088 wt% based on the platinum element. In some further embodiments, the platinum precursor may be mixed into the reaction solution at a content greater than 0.054 wt% and smaller than 0.13 wt% based on the platinum element. In some further embodiments, the platinum precursor may be mixed into the reaction solution at a content greater than 0.054 wt% and smaller than 0.183 wt% based on the platinum element. In some further embodiments, the platinum precursor may be mixed into the reaction solution at a content greater than 0.054 wt% and smaller than 0.211 wt% based on the platinum element.

In some further embodiments, the platinum precursor may be mixed into the reaction solution at a content greater than 0.088 wt% and smaller than 0.13 wt% based on the platinum element. In some further embodiments, the platinum precursor may be mixed into the reaction solution at a content greater than 0.088 wt% and smaller than 0.183 wt% based on the platinum element. In some further embodiments, the platinum precursor may be mixed into the reaction solution at a content greater than 0.088 wt% and smaller than 0.211 wt% based on the platinum element.

In some further embodiments, the platinum precursor may be mixed into the reaction solution at a content greater than 0.13 wt% and smaller than 0.183 wt% based on the platinum element. In some further embodiments, the platinum precursor may be mixed into the reaction solution at a content greater than 0.13 wt% and smaller than 0.211 wt% based on the platinum element. In some further embodiments, the platinum precursor may be mixed into the reaction solution at a content greater than 0.183 wt% and smaller than 0.211 wt% based on the platinum element.

The method for dispersing the mixture in the reaction solution is not particularly limited. In one embodiment, in the first step, in the reaction solution, the mixture may be dispersed through ultrasonic treatment. Non-limiting examples of other dispersion methods may include mechanical stirring, high-speed shear mixing, ball milling, magnetic stirring, fluid fluidized mixing, vibration mixing, micromixers, bubble injection stirring, electrostatic dispersion, etc. The selected dispersion method may vary depending on the viscosity of the solution, particle size, structure of the reaction vessel, etc..

The second step includes physical or chemical treatment to allow the dispersed platinum precursor to be fixed to the support surface. The heat treatment induces platinum ions to be anchored to the support in a single atomic state, and consequently may help form a structure in which the atomic-scale platinum particles are distributed without aggregating into clusters.

As long as the above-described function is performed, a method or temperature of the heat treatment is not particularly limited. In one embodiment, the heat treatment may be performed at a temperature lower than about 900 °C.

In some further embodiments, the heat treatment may be performed in a range of about 400 °C inclusive to 450 °C exclusive. In some further embodiments, the heat treatment may be performed in a range of about 400 °C inclusive to 500 °C exclusive. In some further embodiments, the heat treatment may be performed in a range of about 400 °C inclusive to 550 °C exclusive. In some further embodiments, the heat treatment may be performed in a range of about 400 °C inclusive to 600 °C exclusive. In some further embodiments, the heat treatment may be performed in a range of about 400 °C inclusive to 650 °C exclusive. In some further embodiments, the heat treatment may be performed in a range of about 400 °C inclusive to 700 °C exclusive. In some further embodiments, the heat treatment may be performed in a range of about 400 °C inclusive to 750 °C exclusive. In some further embodiments, the heat treatment may be performed in a range of about 400 °C inclusive to 800 °C exclusive. In some further embodiments, the heat treatment may be performed in a range of about 400 °C inclusive to 850 °C exclusive. In some further embodiments, the heat treatment may be performed in a range of about 400 °C inclusive to 900 °C

In some further embodiments, the heat treatment may be performed in a range of about 450 °C inclusive to 500 °C exclusive. In some further embodiments, the heat treatment may be performed in a range of about 450 °C inclusive to 550 °C exclusive. In some further embodiments, the heat treatment may be performed in a range of about 450 °C inclusive to 600 °C exclusive. In some further embodiments, the heat treatment may be performed in a range of about 450 °C inclusive to 650 °C exclusive. In some further embodiments, the heat treatment may be performed in a range of about 450 °C inclusive to 700 °C exclusive. In some further embodiments, the heat treatment may be performed in a range of about 450 °C inclusive to 750 °C exclusive. In some further embodiments, the heat treatment may be performed in a range of about 450 °C inclusive to 800 °C exclusive. In some further embodiments, the heat treatment may be performed in a range of about 450 °C inclusive to 850 °C exclusive. In some further embodiments, the heat treatment may be performed in a range of about 450 °C inclusive to 900 °C

In some further embodiments, the heat treatment may be performed in a range of about 500 °C inclusive to 550 °C exclusive. In some further embodiments, the heat treatment may be performed in a range of about 500 °C inclusive to 600 °C exclusive. In some further embodiments, the heat treatment may be performed in a range of about 500 °C inclusive to 650 °C exclusive. In some further embodiments, the heat treatment may be performed in a range of about 500 °C inclusive to 700 °C exclusive. In some further embodiments, the heat treatment may be performed in a range of about 500 °C inclusive to 750 °C exclusive. In some further embodiments, the heat treatment may be performed in a range of about 500 °C inclusive to 800 °C exclusive. In some further embodiments, the heat treatment may be performed in a range of about 500 °C inclusive to 850 °C exclusive. In some further embodiments, the heat treatment may be performed in a range of about 500 °C inclusive to 900 °C

In some further embodiments, the heat treatment may be performed in a range of about 550 °C inclusive to 600 °C exclusive. In some further embodiments, the heat treatment may be performed in a range of about 550 °C inclusive to 650 °C exclusive. In some further embodiments, the heat treatment may be performed in a range of about 550 °C inclusive to 700 °C exclusive. In some further embodiments, the heat treatment may be performed in a range of about 550 °C inclusive to 750 °C exclusive. In some further embodiments, the heat treatment may be performed in a range of about 550 °C inclusive to 800 °C exclusive. In some further embodiments, the heat treatment may be performed in a range of about 550 °C inclusive to 850 °C exclusive. In some further embodiments, the heat treatment may be performed in a range of about 550 °C inclusive to 900 °C

In some further embodiments, the heat treatment may be performed in a range of about 600 °C inclusive to 650 °C exclusive. In some further embodiments, the heat treatment may be performed in a range of about 600 °C inclusive to 700 °C exclusive. In some further embodiments, the heat treatment may be performed in a range of about 600 °C inclusive to 750 °C exclusive. In some further embodiments, the heat treatment may be performed in a range of about 600 °C inclusive to 800 °C exclusive. In some further embodiments, the heat treatment may be performed in a range of about 600 °C inclusive to 850 °C exclusive. In some further embodiments, the heat treatment may be performed in a range of about 600 °C inclusive to 900 °C

In some further embodiments, the heat treatment may be performed in a range of about 650 °C inclusive to 700 °C exclusive. In some further embodiments, the heat treatment may be performed in a range of about 650 °C inclusive to 750 °C exclusive. In some further embodiments, the heat treatment may be performed in a range of about 650 °C inclusive to 800 °C exclusive. In some further embodiments, the heat treatment may be performed in a range of about 650 °C inclusive to 850 °C exclusive. In some further embodiments, the heat treatment may be performed in a range of about 650 °C inclusive to 900 °C

In some further embodiments, the heat treatment may be performed in a range of about 700 °C inclusive to 750 °C exclusive. In some further embodiments, the heat treatment may be performed in a range of about 700 °C inclusive to 800 °C exclusive. In some further embodiments, the heat treatment may be performed in a range of about 700 °C inclusive to 850 °C exclusive. In some further embodiments, the heat treatment may be performed in a range of about 700 °C inclusive to 900 °C exclusive. In some further embodiments, the heat treatment may be performed in a range of about 750 °C inclusive to 800 °C exclusive. In some further embodiments, the heat treatment may be performed in a range of about 750 °C inclusive to 850 °C exclusive. In some further embodiments, the heat treatment may be performed in a range of about 750 °C inclusive to 900 °C exclusive.

In some further embodiments, the heat treatment may be performed in a range of about 800 °C inclusive to 850 °C exclusive. In some further embodiments, the heat treatment may be performed in a range of about 800 °C inclusive to 900 °C exclusive. In some further embodiments, the heat treatment may be performed in a range of about 850 °C inclusive to 900 °C exclusive.

The advantage of the method for high-dispersion synthesis of atomic-scale platinum particles according to the embodiment of the present disclosure described above lies in that it may induce dispersion of the atomic-scale platinum particles despite the simple process configuration. In particular, effectively controlling the interaction between the support and the platinum precursor under acidic conditions may allow stable and uniform dispersion to be realized without separate expensive equipment or complex treatment. In addition, since the materials and conditions used in the method of the present disclosure are relatively common, the method of the present disclosure is applicable to various supports, and excellent results may be obtained in terms of process reproducibility.

In another aspect, the present disclosure provides an atomic-scale platinum structure prepared through the method for high-dispersion synthesis of atomic-scale platinum particles according to the embodiment of the present disclosure as described above.

In one embodiment, in the atomic-scale platinum structure, the atomic-scale platinum may be formed on the surface of the support.

In one embodiment, the atomic-scale platinum structure may be applied as a platinum catalyst. Further, in one embodiment, the way the platinum catalyst operates is not particularly limited. For example, the platinum catalyst may act as a photocatalyst to contribute to increasing photochemical conversion efficiency. In particular, the platinum may play a role in inducing the capture and transfer of electrons, and may improve the overall reaction rate of the photoreaction by lowering the activation energy at the reaction surface.

The platinum is a material that may play an important role not only as a catalyst but also in various application fields such as electrochemical interface formation, sensor materials, hydrogen storage, nano-electronic devices, medical diagnosis, and drug delivery. Therefore, technology to evenly disperse the platinum particles at the nano-scale or atomic-scale is a fundamental synthesis technology applicable to a wide range of fields beyond catalysis.

The reaction in which the platinum catalyst acts is not particularly limited. For example, the platinum catalyst acts as a catalyst in the hydrogen evolution reaction from water, thereby promoting the reduction reaction of hydrogen ions and contributing to the efficient progress of the reaction process. In particular, the high electrochemical activity of platinum may act advantageously in lowering the overpotential in the hydrogen evolution reaction (HER), and may also be expected to achieve an effect of increasing the current density by increasing the reaction rate on the electrode surface.

The advantage of the atomic-scale platinum structure according to the embodiment of the present disclosure as described above lies in that atomic-scale platinum particles are uniformly dispersed on the support surface, so that a wider active area may be secured even when the same or a smaller amount of the platinum is used. Such a structure may contribute to increasing reaction efficiency while simultaneously reducing the amount of platinum used.

Hereinafter, Examples of the present disclosure will be described. However, the Examples as described below are merely some embodiments of the present disclosure, and the scope of the present disclosure is not limited to the following Examples.

### Preparation Example

The atomic-scale platinum structure of the present disclosure may be prepared based on a wet chemical method. First, a selected support is dispersed in an appropriate solvent, and a platinum precursor is added thereto and is mixed with the support. The mixture is sufficiently dispersed through stirring or ultrasonic treatment for a certain period of time. Thereafter, the reaction solution is filtered or centrifuged to separate the solid therefrom, and the separated solid is dried to secure a state where the platinum precursor is adsorbed on the support surface. Next, the dried solid is heat-treated so that the platinum is fixed to the support surface. The heat treatment was performed under various temperature conditions. In this regard, the heat treatment was performed in a temperature range lower than 900 °C (optimized condition) and a temperature range of 900 °C or higher (non-optimized condition), respectively.

### Experimental Example

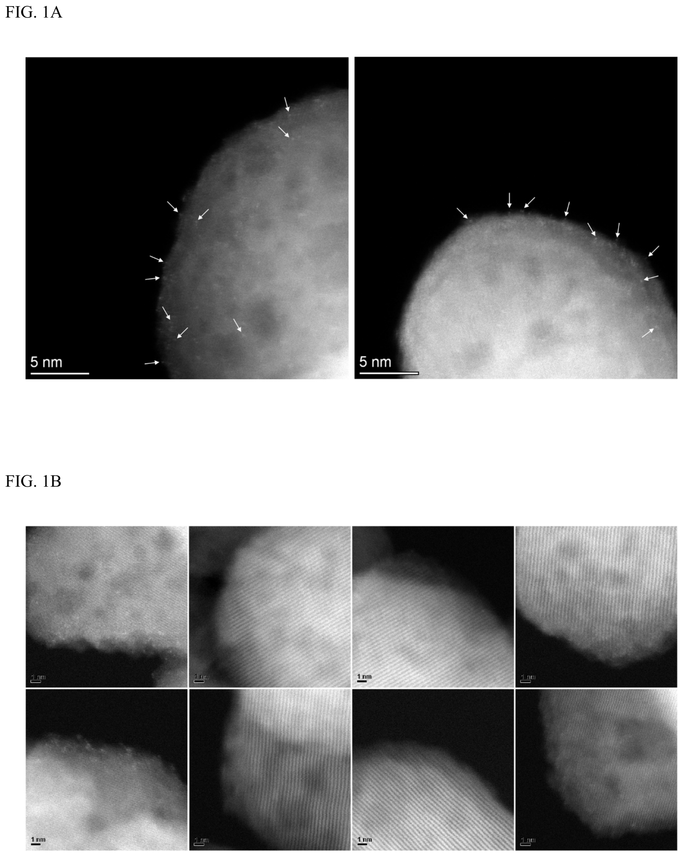

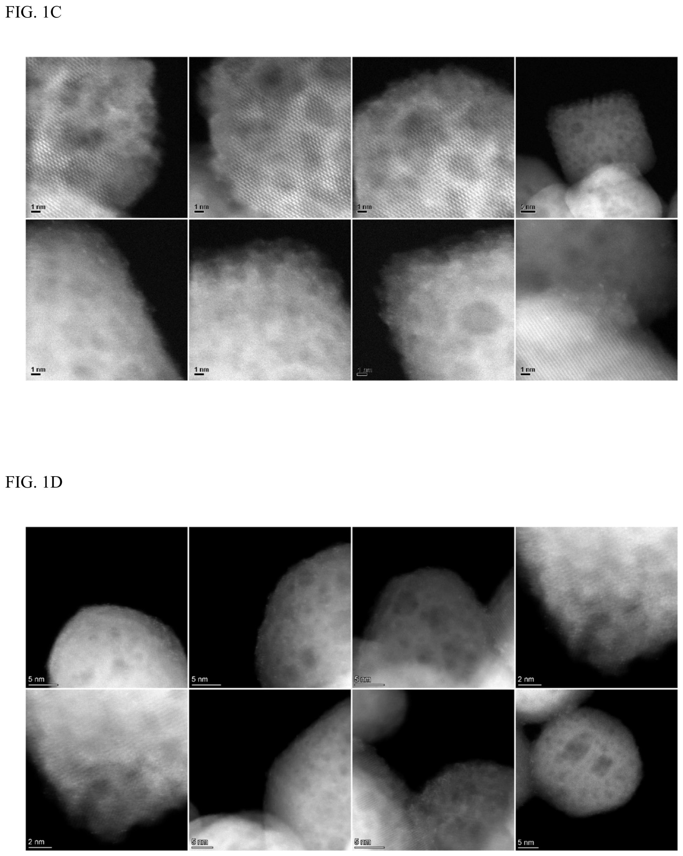

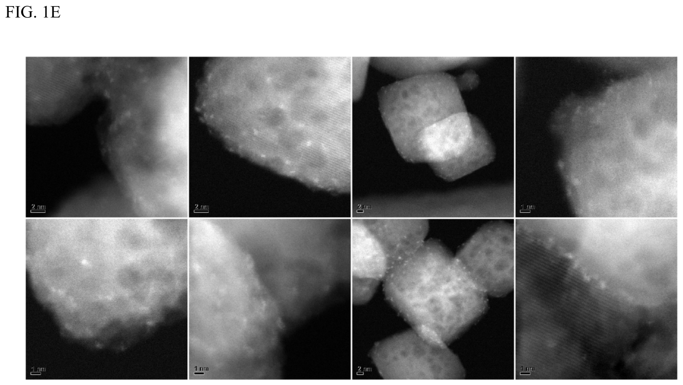

FIG. 1A is a high-resolution HAADF-STEM image showing atomic-scale platinum particles dispersed on the surface of titanium dioxide nanoparticles. The scale bar at the bottom of the image is 5 nm, such that the image provides a resolution capable of observing the distribution state at the atomic scale. Referring to FIG. 1, it may be identified that platinum atoms appearing in the form of bright dots are evenly dispersed along and on the surface of the nanoparticle. Each position indicated by each arrow is a position where a platinum atom exists. The image shows that the platinum atoms exist individually on the support surface without specific clusters or aggregates. This dispersion pattern suggests that the platinum particles are not aggregated and the atomic-scale platinum particles are stably fixed to the support. Through FIG. 1, it may be identified that the platinum high-dispersion synthesis technology of the present disclosure may uniformly disperse the atomic-scale platinum particles on the surface of nanoparticles.

FIG. 1B is a high-resolution HAADF-STEM image showing 0.088 wt% platinum particles dispersed on the surface of titanium dioxide nanoparticles. FIG. 1C is a high-resolution HAADF-STEM image showing 0.130 wt% platinum particles dispersed on the surface of titanium dioxide nanoparticles. FIG. 1D is a high-resolution HAADF-STEM image showing 0.183 wt% platinum particles dispersed on the surface of titanium dioxide nanoparticles. FIG. 1E is a high-resolution HAADF-STEM image showing 0.211 wt% platinum particles dispersed on the surface of titanium dioxide nanoparticles.

Referring to FIG. 1B, FIG. 1C, FIG. 1D, and FIG. 1E, the atomic-scale Pt species are observed sporadically, but do not appear consistently in all TEM image areas. This is determined to be due to low surface coverage, the local nature of STEM analysis, or the absence of Pt in the selected TEM observation area, due to low Pt concentration. Through these figures, it is identified that the dispersed atomic-scale Pt species can be visualized by TEM, and at the same time, it is difficult to corroborate the dispersed state of the atomic-scale Pt solely with TEM due to the inherent limitations of TEM.

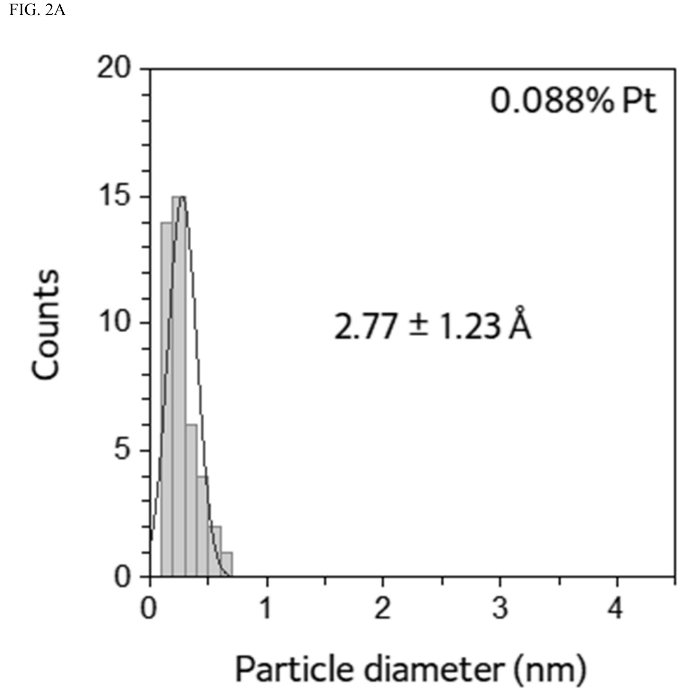

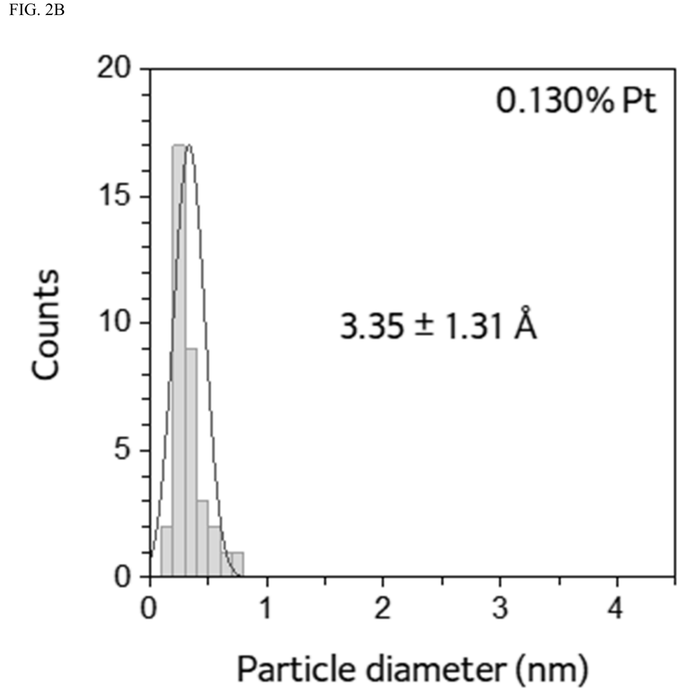

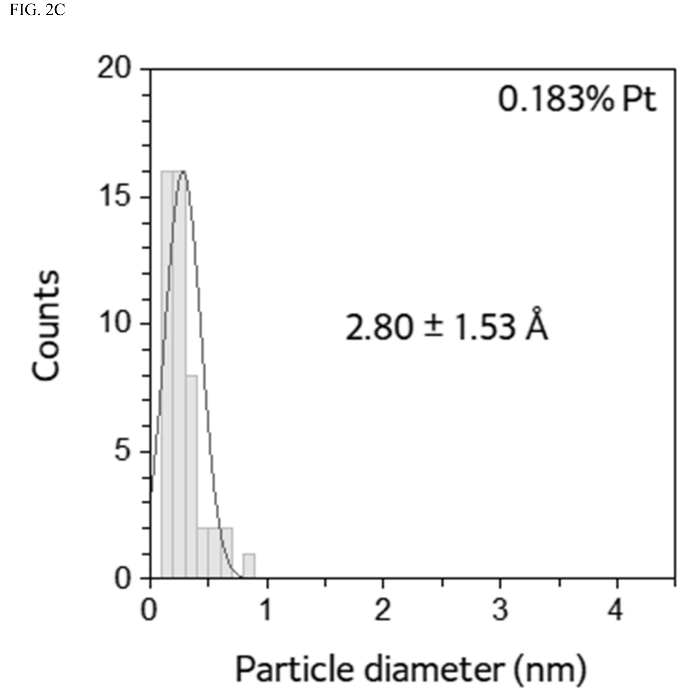

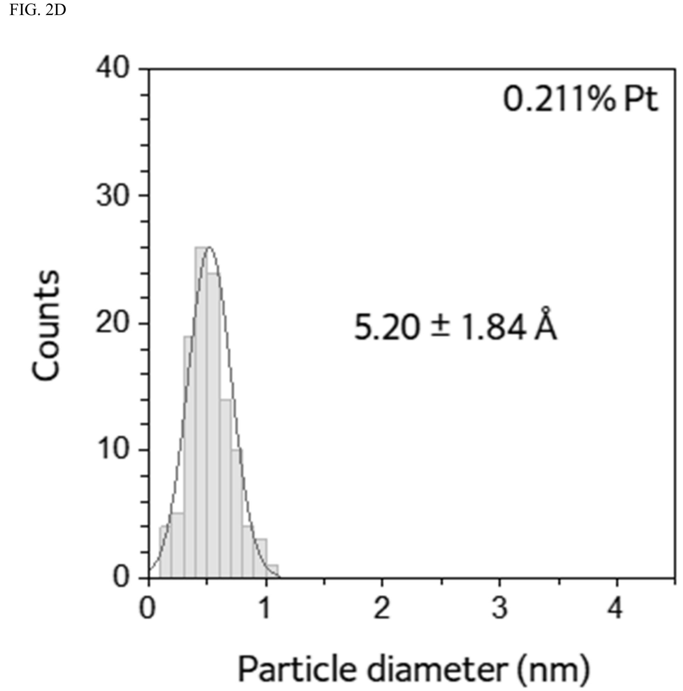

FIG. 2A is a diagram showing the size distribution of atomic-scale platinum particles dispersed on the surface of titanium dioxide nanoparticles when 0.088 wt% of platinum is used. FIG. 2B is a diagram showing the size distribution of atomic-scale platinum particles dispersed on the surface of titanium dioxide nanoparticles when 0.130 wt% of platinum is used. FIG. 2C is a diagram showing the size distribution of atomic-scale platinum particles dispersed on the surface of titanium dioxide nanoparticles when 0.183 wt% of platinum is used. FIG. 2D is a diagram showing the size distribution of atomic-scale platinum particles dispersed on the surface of titanium dioxide nanoparticles when 0.211 wt% of platinum is used.

Referring to FIG. 2A, FIG. 2B, FIG. 2C, and FIG. 2D, the overall distribution curve has an asymmetric distribution skewed to one side, thus suggesting that the platinum does not grow into a cluster form and is stably maintained individually at the atomic scale. In FIG. 2A, the platinum particles have a size distribution of 2.77 ± 1.23 Å; in FIG. 2B, the platinum particles have a size distribution of 3.35 ± 1.31 Å; and in FIG. 2C, the platinum particles have a size distribution of 2.80 ± 1.53 Å. Considering that the diameter of a platinum (Pt) atom is 2.70 Å, it may be identified that single-atomic scale platinum is formed on the support at platinum loadings of 0.088 wt%, 0.130 wt%, and 0.183 wt%. On the other hand, in FIG. 2D, the platinum particles have a size distribution of 5.20 ± 1.84 Å, thus indicating that aggregation occurs due to the relatively high concentration of the platinum loading. Thus, it may be identified that the method for synthesizing the atomic-scale platinum structure according to the present disclosure may effectively implement the dispersion of the atomic-scale platinum particles.

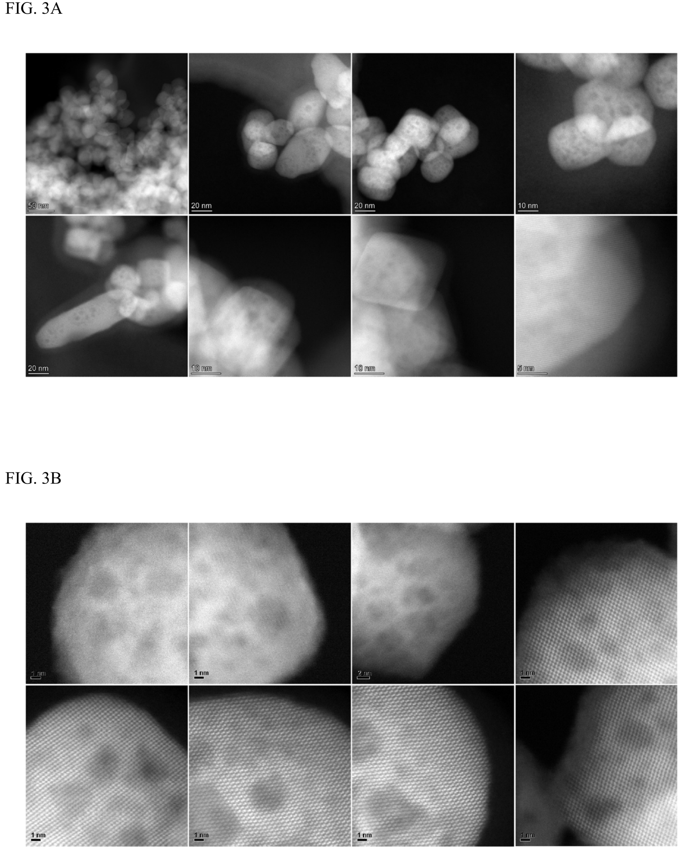

A structure according to the present disclosure was prepared by adding the platinum at a low concentration. FIG. 3A is a high-resolution HAADF-STEM high-magnification image showing 0.054 wt% platinum particles dispersed on the surface of titanium dioxide nanoparticles. FIG. 3B includes high-resolution HAADF-STEM high-magnification and low-magnification images showing 0.025 wt% platinum particles dispersed on the surface of titanium dioxide nanoparticles. In a similar manner to FIG. 1B, FIG. 1C, FIG. 1D, and FIG. 1E, the Pt species are not observed in all selected areas, which is determined to be because the surface coverage of Pt is limited under the low concentration condition.

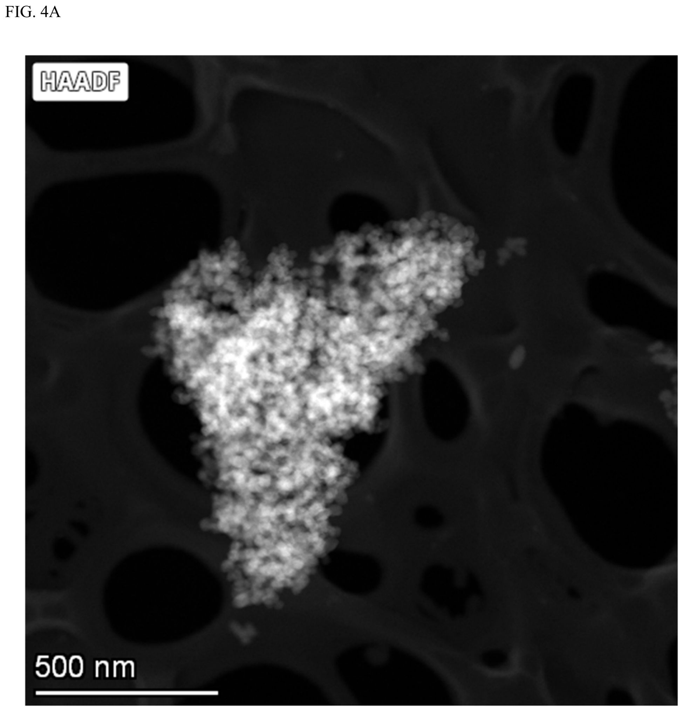

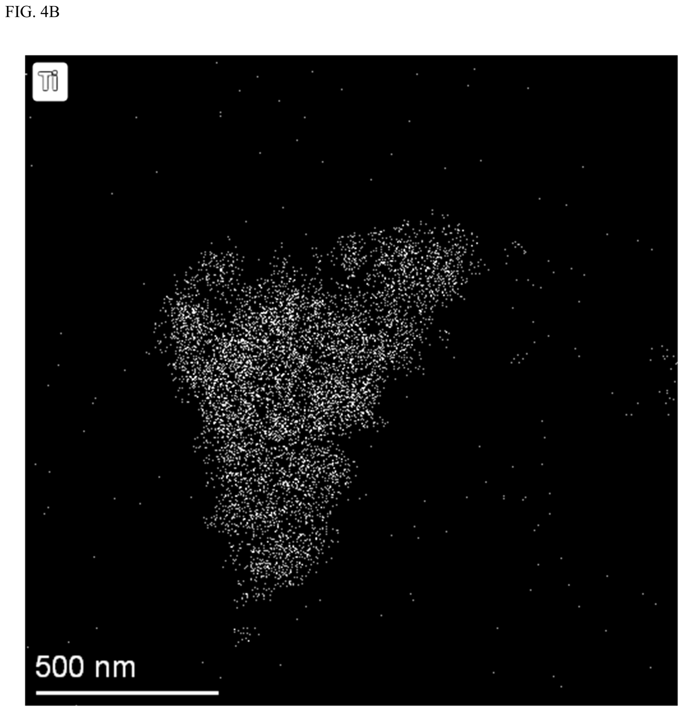

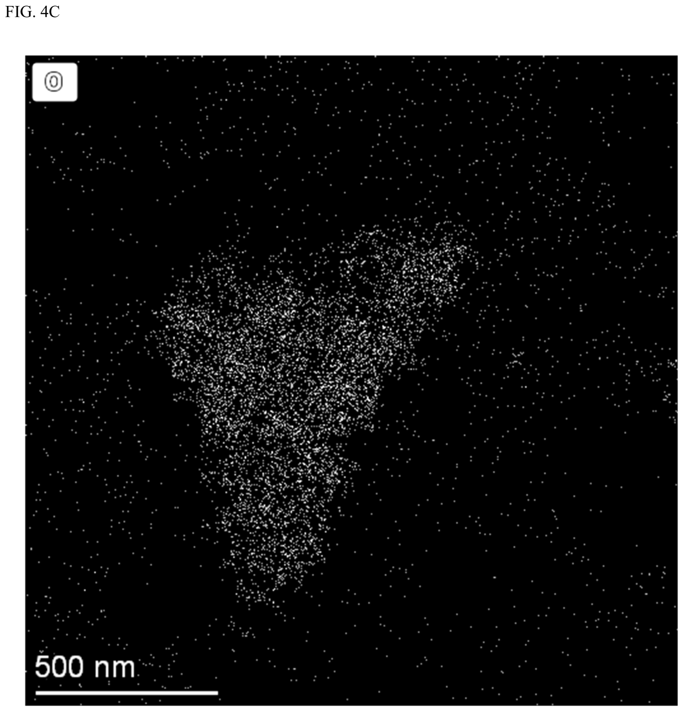

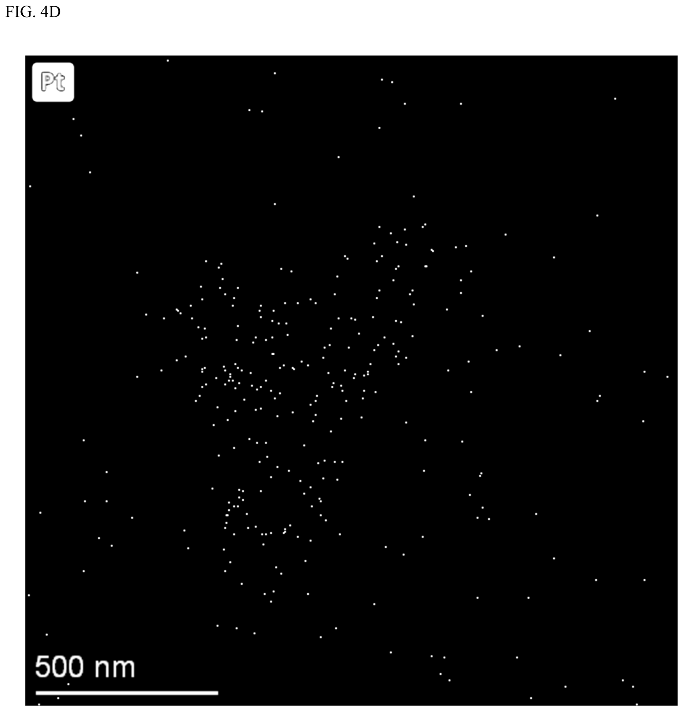

FIG. 4A is a HAADF-STEM image showing atomic-scale platinum particles dispersed on the surface of titanium dioxide nanoparticles when 0.025 wt% of platinum is used. FIG. 4B is a Ti element mapping image of the same area as that in FIG. 4A. FIG. 4C is an O element mapping image of the same area as that in FIG. 4A. FIG. 4D is a Pt element mapping image of the same area as that in FIG. 4A. The scale bar of each image is 500 nm, and the internal spatial distribution of constituent elements of the nanoparticle may be visually identified. Referring to FIG. 4A, a set of high-density bright particles is observed in the HAADF image at the top left. In the same area as that in FIG. 4A, titanium (Ti) is shown as dots in FIG. 4B, oxygen (O) is shown as dots in FIG. 4C, and platinum (Pt) is shown as dots in FIG. 4D. In particular, it may be identified that the signal of Pt is not spread inside the TiO₂ structure but is distributed limitedly on the surface. Through FIG. 4A to FIG. 4D, it may be identified that the synthesis method according to the present disclosure may be effective in selectively dispersing the platinum particles on the surface of the titanium dioxide support even at a low platinum loading amount.

Various spectroscopic techniques were utilized to complement the local information obtained from STEM and to understand the electronic state and local structure of Pt. The used techniques include High-Resolution X-ray Photoelectron Spectroscopy (XPS), X-ray Absorption Spectroscopy (XAS), and CO-probed Diffuse Reflectance Infrared Fourier Transform Spectroscopy (CO-DRIFTS).

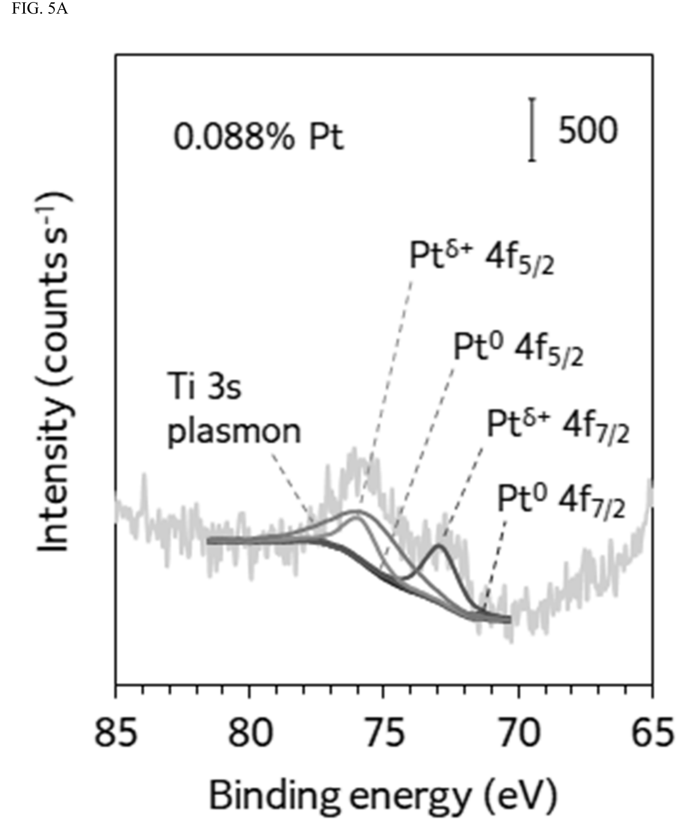

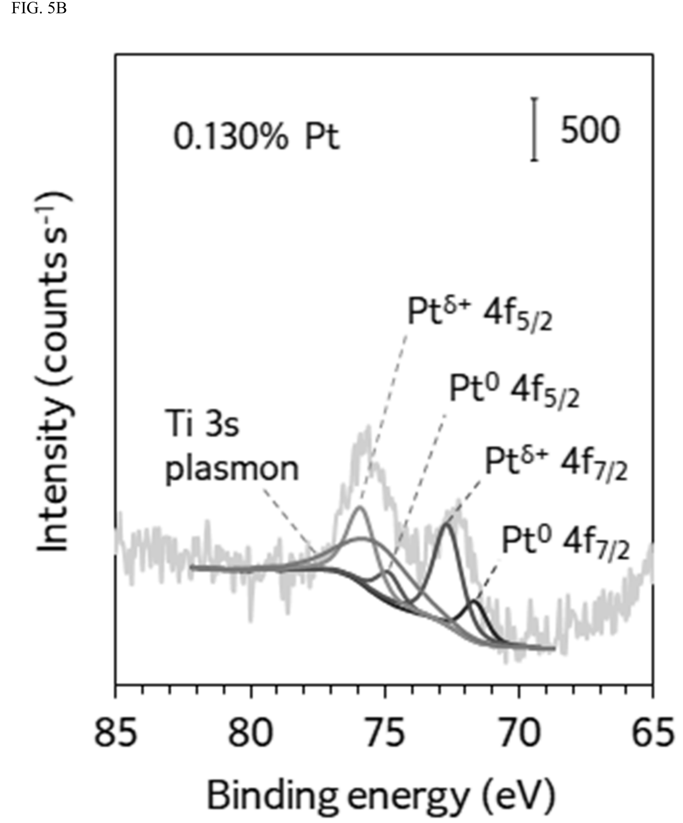

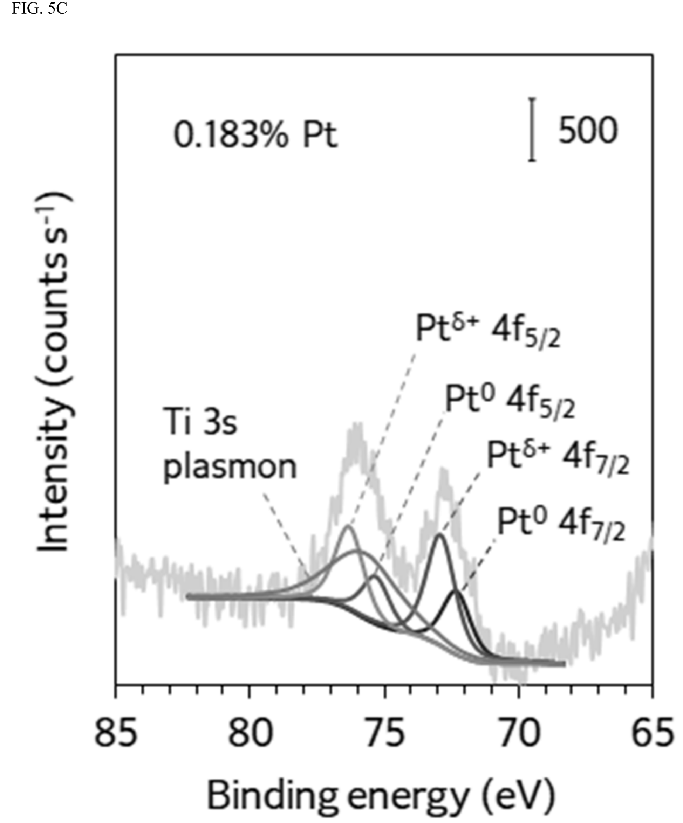

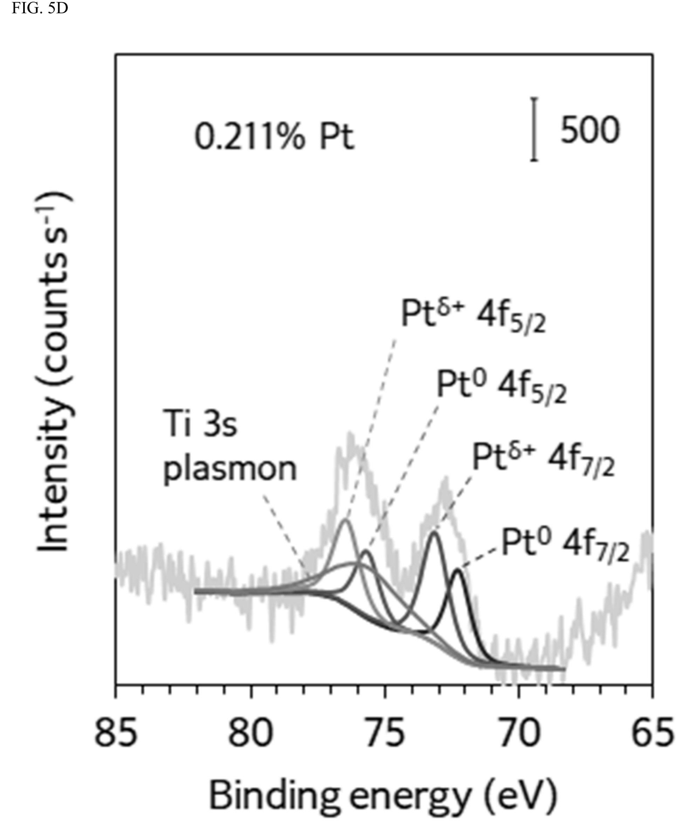

FIG. 5A is a diagram showing the high-resolution Pt 4f XPS spectrum of atomic-scale platinum particles dispersed on the surface of titanium dioxide nanoparticles when 0.088 wt% of platinum is used. FIG. 5B is a diagram showing the high-resolution Pt 4f XPS spectrum of atomic-scale platinum particles dispersed on the surface of titanium dioxide nanoparticles when 0.130 wt% of platinum is used. FIG. 5C is a diagram showing the high-resolution Pt 4f XPS spectrum of atomic-scale platinum particles dispersed on the surface of titanium dioxide nanoparticles when 0.183 wt% of platinum is used. FIG. 5D is a diagram showing the high-resolution Pt 4f XPS spectrum of atomic-scale platinum particles dispersed on the surface of titanium dioxide nanoparticles when 0.211 wt% of platinum is used. The Pt 4f XPS spectra show the 4f_{7/2} peak and 4f_{5/2} peak according to the metallic state and partial oxidation state of platinum using X-ray Photoelectron Spectroscopy (XPS).

Data corresponding to FIG. 5A, FIG. 5B, FIG. 5C, and FIG. 5D are disclosed in Table 1, Table 2, Table 3, and Table 4 below, respectively, and the spin-orbit component, binding energy (BE), full width at half maximum (FWHM), peak area, and corresponding chemical species are listed. "Rel. area" means the relative peak area with respect to the total area of all fitted components (excluding background). "Plasmon loss" is included in the Ti 3s plasmon loss feature in order to correct for photoelectron inelastic scattering caused by collective excitation (plasmon) within the TiO₂ lattice.

**[Table 1]**

| **Spin-orbit component** | **BE (eV)** | **FWHM (eV)** | **Area (cps·eV)** | **Rel. area (%)** | **Chemical species** |
|---|---|---|---|---|---|
| Pt 4f_{7/2} | 71.4 | 1.5 | 74.63 | 4.4 | Pt⁰ |
| Pt 4f_{7/2} | 72.87 | 1.52 | 894.81 | 52.74 | Pt^{δ+} |
| Pt f_{5/2} | 74.7 | 1.5 | 55.97 | 3.3 | Pt⁰ |
| Pt f_{5/2} | 75.87 | 1.52 | 671.11 | 39.56 | Pt^{δ+} |
| Ti 3s plasmon | 75.43 | 3 | 1624.71 | - | Plasmon loss |

**[Table 2]**

| **Spin-orbit component** | **BE (eV)** | **FWHM (eV)** | **Area (cps·eV)** | **Rel. area (%)** | **Chemical species** |
|---|---|---|---|---|---|
| Pt 4f_{7/2} | 71.63 | 1.08 | 463.99 | 14.82 | Pt⁰ |
| Pt 4f_{7/2} | 72.65 | 1.24 | 1324.82 | 42.32 | Pt^{δ+} |
| Pt f_{5/2} | 74.83 | 1.08 | 347.99 | 11.12 | Pt⁰ |
| Pt f_{5/2} | 75.85 | 1.24 | 993.61 | 31.74 | Pt^{δ+} |
| Ti 3s plasmon | 75.2 | 3 | 1675.18 | - | Plasmon loss |

**[Table 3]**

| **Spin-orbit component** | **BE (eV)** | **FWHM (eV)** | **Area (cps·eV)** | **Rel. area (%)** | **Chemical species** |
|---|---|---|---|---|---|
| Pt 4f_{7/2} | 72.3 | 1.25 | 842.13 | 20.58 | Pt⁰ |
| Pt 4f_{7/2} | 72.89 | 1.28 | 1495.51 | 36.56 | Pt^{δ+} |
| Pt f_{5/2} | 75.3 | 1.25 | 631.6 | 15.44 | Pt⁰ |
| Pt f_{5/2} | 76.29 | 1.28 | 1121.64 | 27.42 | Pt^{δ+} |
| Ti 3s plasmon | 75.66 | 3 | 2072.9 | - | Plasmon loss |

**[Table 4]**

| **Spin-orbit component** | **BE (eV)** | **FWHM (eV)** | **Area (cps·eV)** | **Rel. area (%)** | **Chemical species** |
|---|---|---|---|---|---|
| Pt 4f_{7/2} | 72.24 | 1.07 | 1008.1 | 24.33 | Pt⁰ |
| Pt 4f_{7/2} | 73.11 | 1.15 | 1359.11 | 32.81 | Pt^{δ+} |
| Pt f_{5/2} | 75.64 | 1.07 | 756.07 | 18.25 | Pt⁰ |
| Pt f_{5/2} | 76.41 | 1.15 | 1019.34 | 24.61 | Pt^{δ+} |
| Ti 3s plasmon | 75.57 | 3 | 1627.82 | - | Plasmon loss |

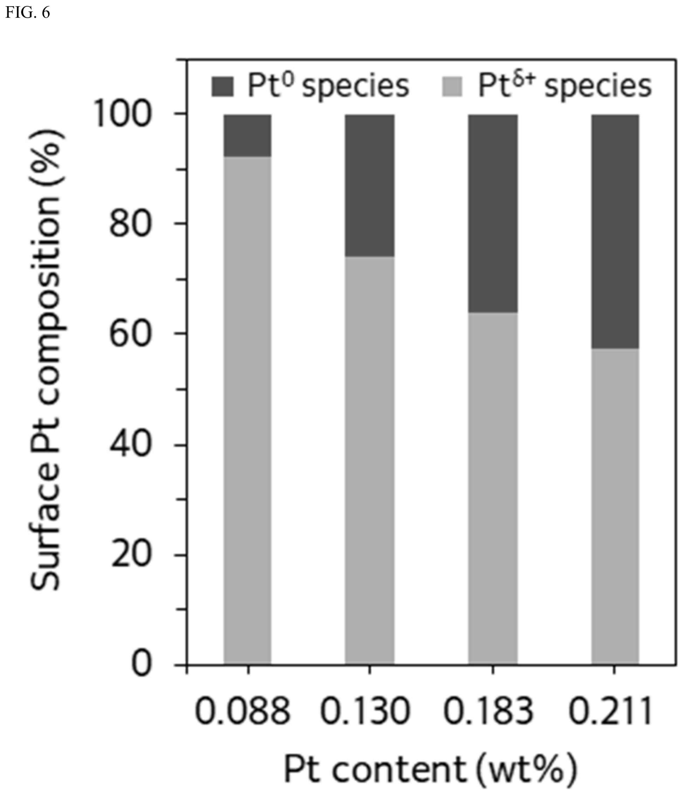

FIG. 6 is a diagram quantitatively comparing the surface chemical state of platinum based on the platinum loading amount or content to compare the ratio of the metallic state and the oxidation state of platinum.

Referring to FIG. 5A, FIG. 5B, FIG. 5C, FIG. 5D, and FIG. 6 together, when platinum in an elemental state is bonded to the support TiO₂, the platinum partially loses electrons and exhibits an oxidation state Pt^{δ+}. When the platinum particles are aggregated with each other, it exhibits a metallic state Pt0. According to the XPS analysis result of the Pt 4f region, when the Pt content is 0.088 wt%, the Pt^{δ+} species predominantly exists, and as the Pt content increases, the percentage thereof decreases from 92.3% to 57.4%. At the same time, the peak position tends to shift toward higher binding energy, which implies a transition where the Pt-Pt interaction is strengthened and Pt gradually assumes metallic properties. This electronic change is a result of the weakening of the Pt-O coordination bond and the charge redistribution between atoms acting together, and reflects the process of platinum being partially reduced as the platinum particles begin to aggregate with each other. Referring to this fact, it may be identified that the structure synthesized according to the method of the present disclosure generally has a high ratio of platinum in the oxidation state bonded to the support, and as the loading amount of platinum is lower, the Pt⁰ peak disappears, resulting in a high dispersion state. Referring to this face, it may be identified that the structure synthesized according to the method of the present disclosure generally has a high ratio of platinum in an elemental state bonded to the support, and as the loading amount of platinum is lower, the peak corresponding to Pt⁰ disappears, resulting in a high dispersion state. As the platinum loading amount is lower, the fraction of the oxidation state (Pt^{δ+}) accounts for the majority, significantly surpassing the fraction of the metallic state (Pt⁰), which means that platinum is in a partially oxidized form through strong electronic interaction and thus is stabilized on the support surface.

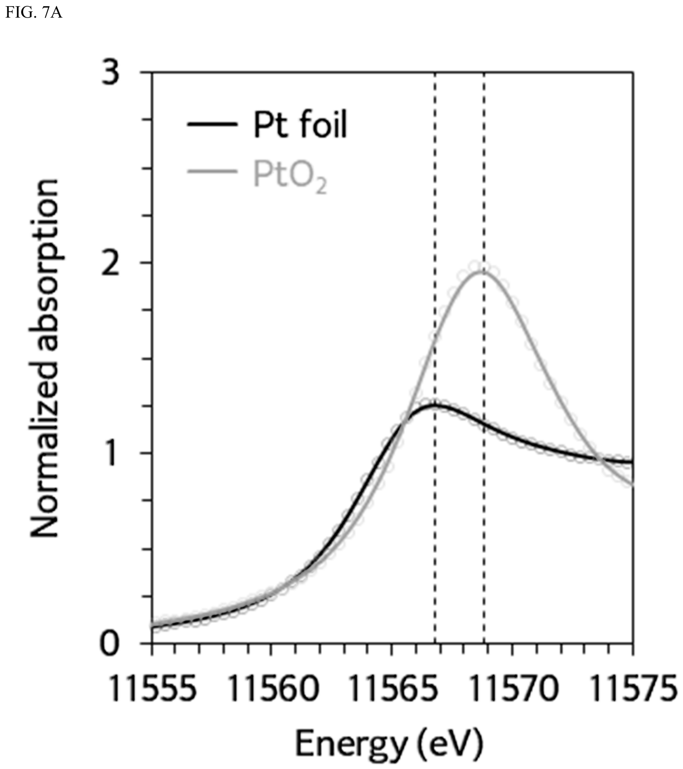

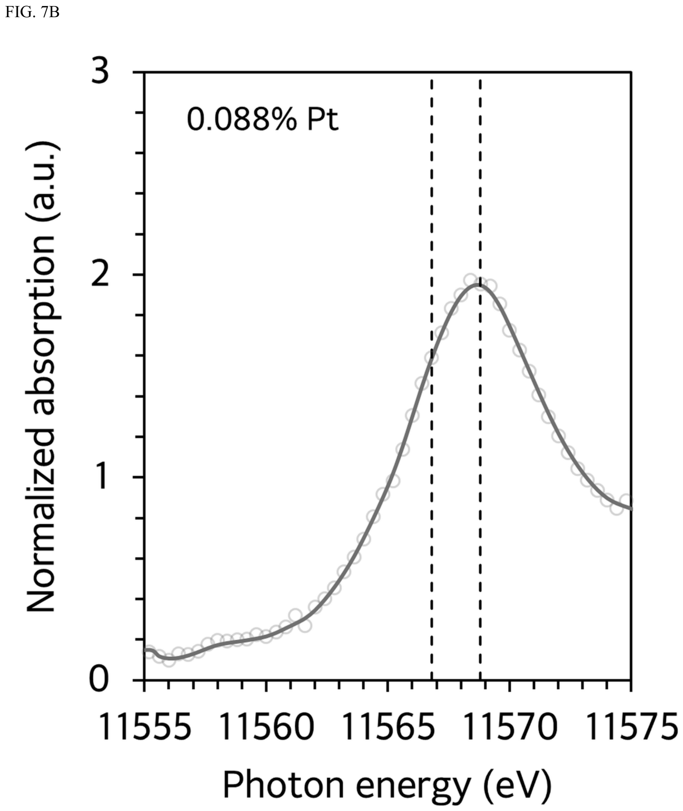

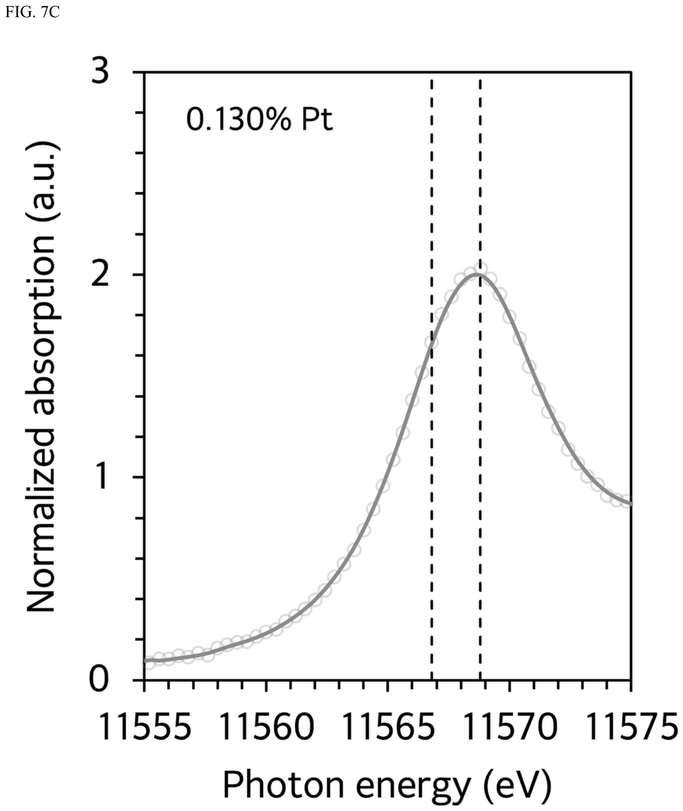

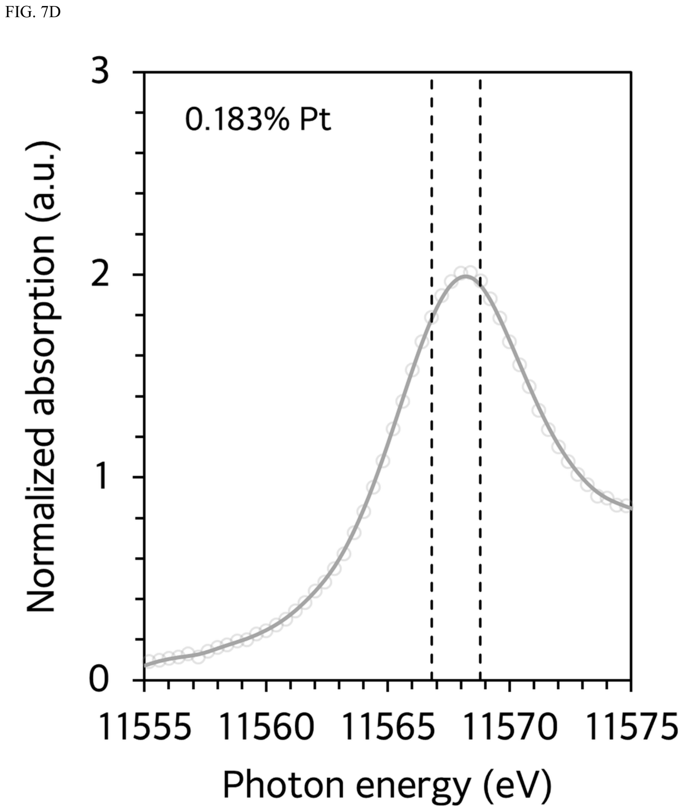

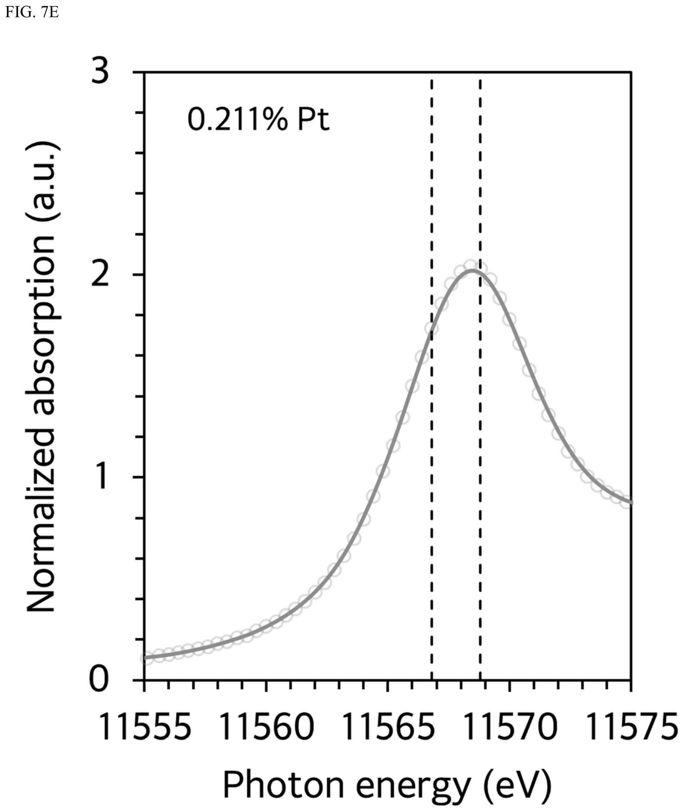

FIG. 7A is a diagram showing reference spectra of a metal platinum foil and platinum oxide (PtO₂) to identify the XANES (X-ray Absorption Near Edge Structure) spectra of platinum in the metallic state and the oxidation state. FIG. 7B is a diagram showing the Pt L₃-edge XANES spectrum of the platinum particles of the present disclosure together with the XANES baseline identified in FIG. 7A when 0.088 wt% of platinum is used. FIG. 7C is a diagram showing the Pt L₃-edge XANES spectrum of the platinum particles of the present disclosure together with the XANES baseline identified in FIG. 7A when 0.130 wt% of platinum is used. FIG. 7D is a diagram showing the Pt L₃-edge XANES spectrum of the platinum particles of the present disclosure together with the XANES baseline identified in FIG. 7A when 0.183 wt% of platinum is used. FIG. 7E is a diagram showing the Pt L₃-edge XANES spectrum of the platinum particles of the present disclosure together with the XANES baseline identified in FIG. 7A when 0.211 wt% of platinum is used. FIG. 7B is a diagram showing the Pt L₃-edge XANES spectrum of the platinum particles of the present disclosure together with the XANES baseline identified in FIG. 7A. All spectra were normalized to the edge jump. The oxidation state of Pt was evaluated through XANES analysis exploring the 2p_{3/2} → 5d transition, and in the case of samples with a Pt content smaller than 0.130 wt%, the characteristic white line peak observed at 11,568.8 eV is similar to the Pt⁴⁺(5d⁶4s⁰) state of PtO₂, indicating mainly an oxidized Pt state. On the other hand, when the Pt content increases, this peak shifts toward the lower energy, which implies partial reduction of Pt species. Accordingly, the average oxidation state ranges from +2.4 to +3.2, indicating a mixed-valence state where Pt⁴⁺, Pt²⁺(5d⁸4s⁰), and Pt⁰(5d⁹4s¹) species coexist. Based on these results, it may be confirmed that the main absorption peak is located in a higher energy region than the metal platinum foil in all samples, suggesting that platinum exists in an oxidized state by losing some electrons and is stabilized regardless of the loading amount.

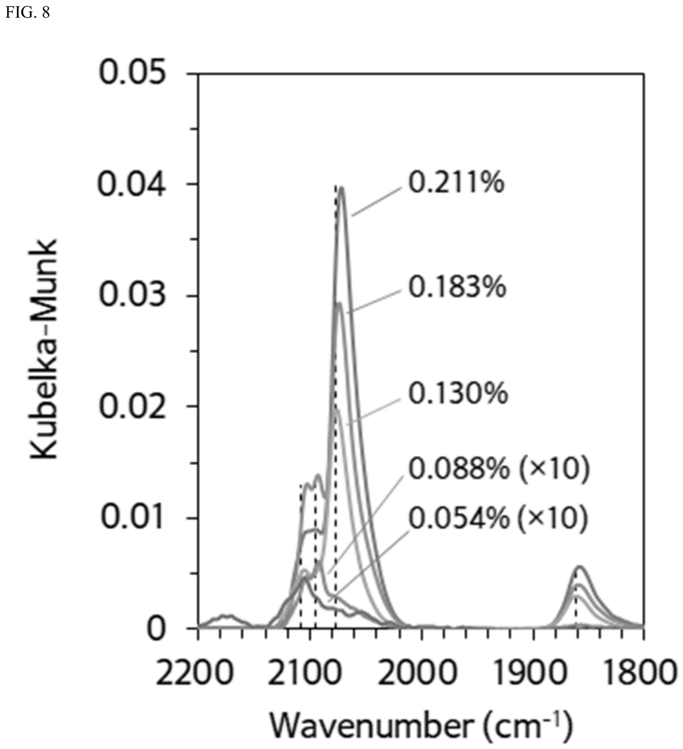

FIG. 8 shows the results of CO-DRIFTS analysis of the platinum particles of the present disclosure. In CO-DRIFTS, CO is bonded to a single platinum atom (on-top CO) or bonded to and disposed between two or more platinum atoms (bridging CO). In this regard, the peak appearing near the wavenumber of 2100 cm⁻¹ corresponds to the on-top CO, and the peak appearing near the wavenumber of 1850 to 1950 cm⁻¹ corresponds to the bridging CO. Referring to FIG. 8, in samples with high platinum content (0.211%, 0.183%), the on-top CO peak appears relatively strong, which means that metallic state platinum (Pt⁰) exists on the surface and CO adsorption has occurred. On the other hand, in samples with low platinum content (0.088%, 0.054%), the on-top CO peak is very weak or barely observed, which means that platinum exists in an oxidation state and thus the CO bonding is limited, and it may be identified that atomic-scale platinum is adsorbed on the support and platinum is in a state of partially losing electrons.

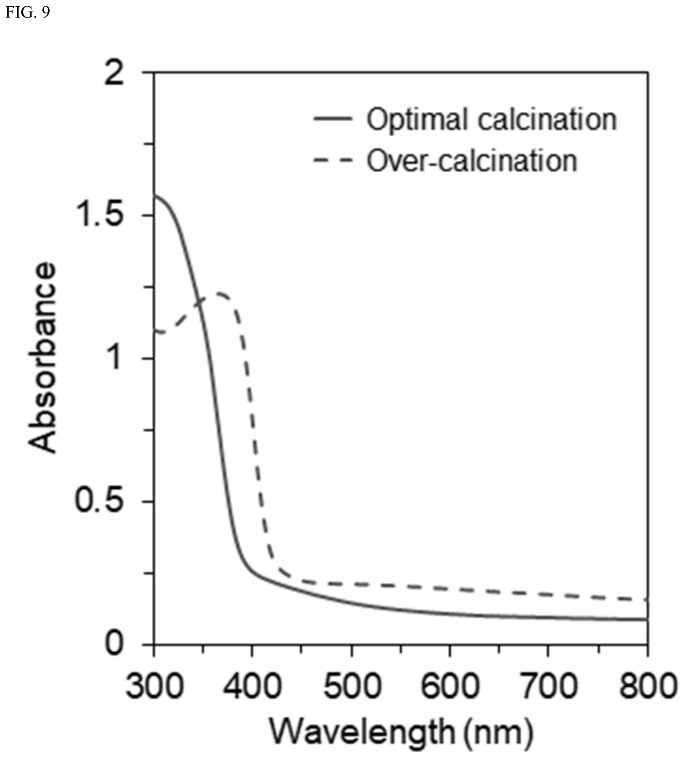

FIG. 9 is a diagram comparing the UV-Vis absorption spectra of a Pt/TiO₂ structure heat-treated under optimized conditions and a Pt/TiO₂ structure heat-treated under non-optimized conditions with each other. Referring to FIG. 9, in the case of heat treatment under optimized conditions, a rapid decrease in absorption occurs around 300 nm and relatively stable absorption characteristics are exhibited, whereas in the case of heat treatment under non-optimized conditions, a peak is observed in the same wavelength region of 300 nm and then a gradual decrease pattern is exhibited. This difference means that the heat treatment conditions influenced the dispersion of platinum and the bonding pattern with the support. In particular, this may mean that under the non-optimized conditions, platinum particles are aggregated with each other or the electronic environment is not uniform. Through FIG. 9, it may be identified that the heat treatment optimization according to the present disclosure may contribute to increasing the structural and electronic uniformity of the structure.

Although the embodiments of the present disclosure have been described above with reference to the accompanying drawings, the present disclosure may not be limited to the embodiments and may be implemented in various different forms. Those of ordinary skill in the technical field to which the present disclosure belongs will be able to appreciate that the present disclosure may be implemented in other specific forms without changing the technical idea or essential features of the present disclosure. Therefore, it should be understood that the embodiments as described above are not restrictive but illustrative in all respects.

## Claims

1. A method for high-dispersion synthesis of atomic-scale platinum particles, the method comprising:
a first step of mixing and dispersing a support and a platinum precursor with each other in an reaction solution; and
a second step of separating, drying, and heat-treating solid from the reaction solution.

2. The method for high-dispersion synthesis of atomic-scale platinum particles according to claim 1, wherein the reaction solution is an acidic reaction solution.

3. The method for high-dispersion synthesis of atomic-scale platinum particles according to claim 1, wherein the support includes at least one of a metal oxide support or a carbon-based support.

4. The method for high-dispersion synthesis of atomic-scale platinum particles according to claim 1, wherein the support is a nanoparticle.

5. The method for high-dispersion synthesis of atomic-scale platinum particles according to claim 1, wherein the platinum precursor includes at least one of a salt containing Pt or H₂PtCl₆.

6. The method for high-dispersion synthesis of atomic-scale platinum particles according to claim 1, wherein in the first step, a mixture of the support and the platinum precursor is subjected to dispersion in the reaction solution using ultrasonic treatment.

7. The method for high-dispersion synthesis of atomic-scale platinum particles according to claim 1, wherein the platinum precursor is added into the reaction solution at a content smaller than 0.211 wt% based on platinum element.

8. An atomic-scale platinum structure prepared through the method for high-dispersion synthesis of atomic-scale platinum particles according to claim 1.

9. The atomic-scale platinum structure according to claim 8, wherein in the atomic-scale platinum structure, the atomic-scale platinum particles are dispersed on a surface of the support.
